# EUROPEAN PATENT APPLICATION

(11) **EP 1 912 318 A1**
(43) Date of publication of application: **16.04.2008**
(21) Application number: 06781676.9
(22) Date of filing: 26.07.2006
(51) Int. Cl.: H02K 35/02, F02G 1/053, H02K 33/16

(54) **RECIPROCATING CYCLE ENGINE**

(30) Priority: 29.07.2005 JP 2005221743
(71) Applicant: Mitsubishi Materials PMG Corporation, Niigata-shi, Niigata 950-8640 (JP)
(72) Inventor: MIYAHARA, M., c/o MITSUBISHI MATERIALS CORPORATION, Niigata-shi, Niiata 950-8640 (JP); KANAGAWA, K., c/o MITSUBISHI MATERIALS CORPORATION, Saitama-shi, Saitama 330-8508 (JP)
(74) Representative: HOFFMANN EITLE
(86) International application number: PCT/JP2006/314764
(87) International publication number: WO 2007/013505

(57) **Abstract**

A reciprocating engine includes: an inner stator having an axis; a mover that has a cylindrical shape and is placed coaxially around the inner stator, and that moves reciprocatingly along the axis; and an outer stator that has a cylindrical shape and is placed coaxially around the mover, wherein the outer stator has: an aperture portion that is formed in an inner circumferential surface thereof that faces the mover; an internal space that opens via the aperture portion; and a wound wire coil that is placed inside the internal space, and wherein the mover has: a field magnet portion; and restoring magnet portions that are provided respectively at both end positions along the axis of the field magnet portion.

## Description

### FIELD OF THE INVENTION

The present invention relates to a reciprocating engine.

Priority is claimed on Japanese Patent Application No. 2005-221743, filed July 29, 2005, the contents of which are incorporated herein by reference.

### BACKGROUND OF THE INVENTION

Conventionally, reciprocating engines are used in driving apparatuses and electrical generators and the like. For example, the Stirling cycle engine illustrated in Patent document 1 described below is known as an example of a driving apparatus.

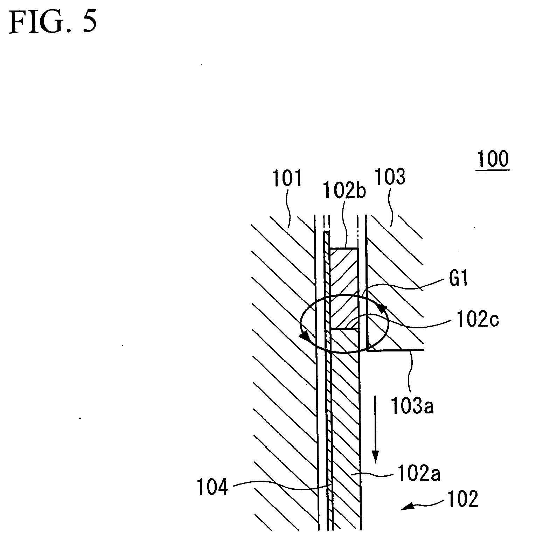

A structure such as that shown in FIG 5 is known as a conventional reciprocating engine 100. Namely, a mover 102 and an outer stator 103 that are each formed in a cylindrical shape are fitted coaxially around a toroidal or columnar inner stator 101. An internal space that opens via an aperture portion 103a which is formed in an inner circumferential surface of the outer stator 103 is formed in the outer stator 103. A wound wire coil (not shown) is provided in this internal space, and the mover 102 is able to move reciprocatingly in the axial direction thereof. A magnetic path that is continuous via a field magnet portion 102a is formed inside the outer stator 103 and the inner stator 101.

The mover 102 of the reciprocating engine which is provided in an electrical generator is provided with the field magnet portion 102a, and restoring magnets 102b that are connected to both end portions in the axial direction of the field magnet portion 102a. When the mover 102 is positioned at a stroke end, by then generating restoring force in the opposite direction from the movement direction thereof by the restoring magnets 102b, the mover 102 is prevented from moving away from between the inner stator 101 and the outer stator 103. The magnetic field direction of the field magnet portion 102a is towards the outside in the radial direction, namely, towards the outer stator 103, while the magnetic field direction of the restoring magnet portions 102b is towards the inner side in the radial direction, namely, towards the inner stator 101. The mover 102 is supported at the inner circumferential surface thereof by an outer circumferential surface of a metal tube 104 that is formed, for example, from stainless steel.

Generally, only the field magnet 102a is provided in the mover 102 of a reciprocating engine which is provided in a driving apparatus, and the restoring magnet portions 102b are not provided.
Patent document 1: Japanese Unexamined Patent Application, First Publication No. 2004-293829

### DISCLOSURE OF THE INVENTION

### PROBLEMS TO BE SOLVED BY THE INVENTION

In the conventional reciprocating engine 100 which is provided in an electrical generator, the mover 102 is moved in the axial direction thereof such that one end portion 102c in the axial direction of the field magnet portion 102a approaches an aperture circumferential edge of the aperture portion 103a of the outer stator 103, and such that the other end portion (not shown) of the field magnet portion 102a moves away from the aperture circumferential edge of the aperture portion 103a. When the mover 102 reaches the end of its stroke where the load of the reciprocating engine 100 is the maximum, the end portion 102c does not advance beyond the aperture circumferential edge of the aperture portion 103a, and the outer circumferential surface of the end portion 102c and the inner circumferential surface of the outer stator 103 face each other.

This type of movement is liable to occur when the load acting on the mover 102 is considerable even when the reciprocating engine 100 is provided in a driving apparatus.

Because of this, at the stroke end position of the mover 102 where the load of the reciprocating engine 100 is the maximum, a short circuiting magnetic path G1 is generated that is continuous in the interiors of the inner stator 101 and outer stator 103 via the vicinity of the end portion 102c of the field magnet portion 102a, but that does not reach as far as the outer circumferential portion of the outer stator 103, which gives rise to the problem that it is difficult to achieve any further improvement in the output of the reciprocating engine 100. This type of problem occurs irrespective of the type of driving apparatus or electrical generator in which the reciprocating engine 100 is provided.

### MEANS FOR SOLVING THE PROBLEM

The present invention was conceived in view of the above described circumstances, and it is an object thereof to provide a reciprocating engine that makes it possible to achieve a further improvement in output.

In order to solve the above described problems and achieve the above described object, the reciprocating engine of the present invention is provided with: an inner stator having an axis; a mover that has a cylindrical shape and is placed coaxially around the inner stator, and that moves reciprocatingly along the axis; and an outer stator that has a cylindrical shape and is placed coaxially around the mover, wherein the outer stator has: an aperture portion that is formed in an inner circumferential surface side thereof that faces the mover; an internal space that opens via the aperture portion; and a wound wire coil that is placed inside the internal space, and wherein the mover has: a field magnet portion; and restoring magnet portions that are provided respectively at both end positions along the axis of this field magnet portion, and wherein boundary faces between the field magnet portion and the respective restoring magnet portions are each positioned such that, when the mover arrives at a stroke end position where the load on the reciprocating engine is at maximum, they advance beyond an aperture circumferential edge of the aperture portion and reach to an inside of the aperture portion.

In the present invention, at the stroke end position of the mover where the load of the reciprocating engine is the maximum, because the boundary face between the field magnet portion and the restoring magnet portion advances beyond the aperture circumferential edge of the aperture portion, it is possible at the stroke end to prevent the vicinity of the end portion of the field magnet portion facing the inner circumferential surface of the outer stator. Accordingly, when the mover reaches the stroke end, it is possible to suppress the generation of a short circuiting magnetic path that is continuous in the interiors of the outer stator and the inner stator via a portion that includes the vicinity of the end portion of the field magnet portion, but that does not reach as far as the outer circumferential portion of the outer stator, and it is therefore possible to achieve an improvement in the output of the reciprocating engine.

It is also possible for an undercut portion that is connected to the interior of the aperture portion and is recessed towards the outside in the radial direction to be formed in the aperture circumferential edge of the aperture portion in the inner circumferential surface of the outer stator. In this case, it is possible to reliably prevent the vicinity of the end portion of the field magnet portion facing the inner circumferential surface of the outer stator when the mover reaches the stroke end position.

### EFFECTS OF THE INVENTION

According to the reciprocating engine of the present invention, it is possible to suppress the generation of short circuiting magnetic paths, and achieve an improvement in the output thereof.

### BRIEF DESCRIPTION OF THE DRAWINGS

FIG 1 is a partial cross-sectional view showing a reciprocating engine illustrating a first embodiment of the present invention.
FIG 2 is a partially enlarged view showing the reciprocating engine shown in FIG 1, and showing a state in which a load on the reciprocating engine is at the maximum, namely, a state in which the mover is positioned at an end of the stroke of the mover.
FIG 3 is a graph showing the result when operating effects of the reciprocating engine shown in FIG. 1 were verified.
FIG 4 is a partially enlarged view showing a reciprocating engine illustrating a second embodiment of the present invention, and showing a state in which a load on the reciprocating engine is at the maximum, namely, a state in which the mover is positioned at an end of the stroke of the mover.
FIG 5 is a partially enlarged view showing a conventional reciprocating engine, and showing a state in which a load on the reciprocating engine is at the maximum, namely, a state in which the mover is positioned at an end of the stroke of the mover.

### DESCRIPTION OF THE PREFERRED EMBODIMENTS

A first embodiment of the present invention will now be described with reference made to the drawings.

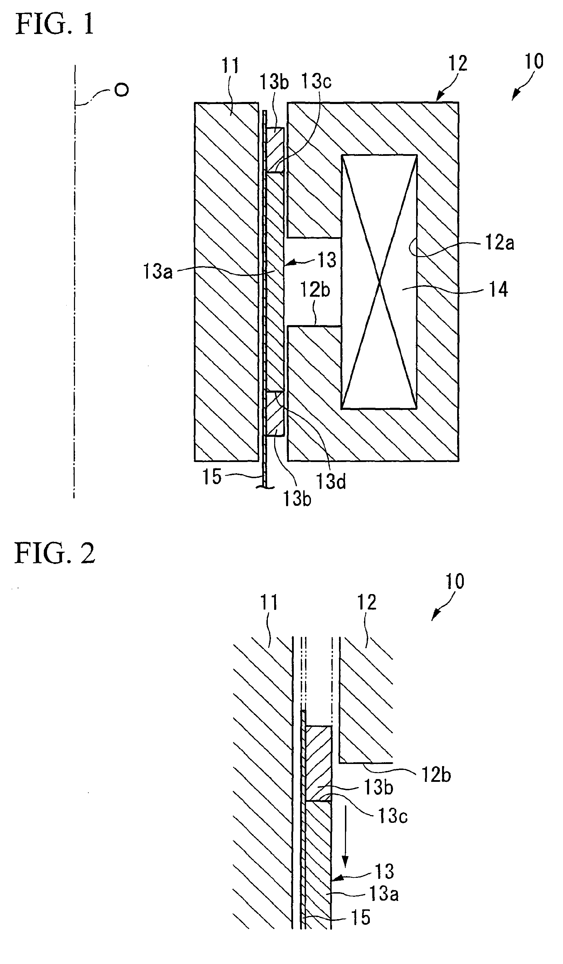

A reciprocating engine 10 of the present embodiment is provided in a variety of types of electrical generator and, as is shown in FIG. 1, a mover 13 and an outer stator 12 that are each formed in a cylindrical shape are fitted in this sequence from an inner side in the radial direction towards an outside thereof coaxially around a toroidal or columnar inner stator 11. Namely, an outer circumferential surface of the mover 13 and an inner circumferential surface of the outer stator 12 face each other. An inner circumferential surface of the mover 13 and an outer circumferential surface of the inner stator 11 are positioned so as to face each other via a metal tube 15 (described below).

The outer stator 12 is formed, for example, by stacking a plurality of steel plates in the circumferential direction thereof, or is formed by a sintered body that is made up of a compound soft magnetic material. If the former (i.e., a steel plate body) is used, then the steel plates of the portion that constitutes the inner circumferential surface side of the outer stator 12 have a smaller thickness than the steel plates of the portion that constitutes the outer circumferential surface side thereof. If the latter (i.e., compound soft magnetic material) is used, then a metal powder which is obtained by coating a metal powder with an electrically non-conductive material such as a thermosetting resin or the like is compaction molded into a predetermined configuration, and heat processing is performed in order, if necessary, to perform annealing to eliminate distortion, to thermoset the non-conductive material, or to improve the strength of the materials and the like.

As the metal powder it is possible to use an iron powder such as pure iron powder, a Fe-Si based iron-base soft magnetic alloy powder that contains 0.1 to 10 percent by weight of silicon (Si) and in which the remainder is made up of iron and unavoidable impurities (for example, an Fe - 3% Si powder), a Fe-Si-Al based iron-base soft magnetic alloy powder that contains 0.1 to 10 percent by weight of silicon (Si), 0.1 to 20 percent by weight of Aluminum (Al), and in which the remainder is made up of iron and unavoidable impurities (for example, Sendust powder having a composition made up of Fe - 9% Si - 5% Al), a Fe-Al based iron-base soft magnetic alloy powder that contains 0.1 to 20 percent by weight of Aluminum (Al) and in which the remainder is made up of iron and unavoidable impurities (for example, Alperm powder having a composition made up of Fe -16% Al), a Fe-Cr based iron-base soft magnetic alloy powder that contains 1 to 20 percent by weight of chromium (Cr), and, depending on requirements, contains at least one of not more than 5 percent by weight of A1 and not more than 5 percent by weight of Si, and in which the remainder is made up of iron and unavoidable impurities, a nickel-base soft magnetic alloy powder that contains 35 to 85 percent by weight of nickel (Ni), and, depending on requirements, contains at least one of not more than 5 percent by weight of molybdenum (Mo), not more than 5 percent by weight of copper (Cu), not more than 2 percent by weight of Cr, and not more than 0.5 percent by weight of manganese (Mn), and in which the remainder is made up of iron and unavoidable impurities, and a Fe-Co-V based iron-base soft magnetic alloy powder that contains 0.1 to 52 percent by weight of cobalt (Co) and 0.1 to 3 percent by weight of Vanadium (V), and in which the remainder is made up of iron and unavoidable impurities.

As the non-conductive material that covers the metal powder, either an organic non-conductive material or an inorganic non-conductive material, or a mixed material made up of a mixture of an organic non-conductive material and an inorganic non-conductive material is used. As the organic non-conductive material it is possible to use epoxy resin, fluorine resin, phenol resin, urethane resin, silicone resin, polyester resin, phenoxy resin, urea resin, isocyanate resin, acrylic resin, and polyimide resin and the like. As the inorganic non-conductive material it is possible to use phosphates such as iron phosphate, various types of glass non-conductive materials, water glass containing sodium silicate as its primary constituent, and non-conductive oxides.

The mover 13 of the present embodiment is provided with a field magnet portion 13a, and restoring magnet portions 13b that are joined to both end portions in the direction of the axis O of the field magnet portion 13a. The mover 13 is supported at the inner circumferential side thereof on an outer circumferential surface of a metal tube 15 that is formed, for example, from stainless steel.

An internal space 12a that opens via an aperture portion 12b which is formed in an inner circumferential surface of the outer stator 12 is formed in the outer stator 12. A wound wire coil 14 is provided in this internal space 12a.

In the above described structure, the mover 13 is able to move reciprocatingly along the axis O thereof between the inner stator 11 and the outer stator 12. A magnetic path that is continuous via the field magnet portion 13a is formed inside the outer stator 12 and the inner stator 11.

In the present embodiment, a structure is employed in which the mover 13 is moved in the direction of the axis O thereof such that a first end portion 13c in the direction of the axis O of the field magnet portion 13a approaches an aperture circumferential edge of the aperture portion 12b of the outer stator 12, and such that a second end portion 13d of the field magnet portion 13a moves away from the aperture circumferential edge of the aperture portion 12b, and in which, at the stroke end position of the mover 13 where the load of the reciprocating engine 10 is the greatest, the first end portion 13c advances beyond the aperture circumferential edge of the aperture portion 12b of the outer stator 12.

Namely, in FIG 1 and FIG 2, at the stroke end position when the mover 13 moves to the bottom in the direction of the axis O thereof such that a top end portion (i.e., the first end portion) 13c in the direction of the axis O of the field magnet portion 13a approaches the aperture circumferential edge of the aperture portion 12b of the outer stator 12, and such that a bottom end portion (i.e., the second end portion) 13d moves away from the aperture circumferential edge of the aperture portion 12b, the top end portion 13c advances beyond the aperture circumferential edge of the aperture portion 12b. Namely, the outer circumferential surface of the top end portion 13c of the field magnet 13a does not face the inner circumferential surface of the outer stator 12. In other words, the restoring magnet portion 13b near to the top end portion 13c faces the aperture portion 12b of the outer stator 12.

Conversely to this, at the stroke end position as well when the mover 13 moves to the top in the direction of the axis O thereof such that the bottom end portion 13d of the field magnet portion 13a approaches the aperture circumferential edge of the aperture portion 12b of the outer stator 12, and such that the top end portion 13c moves away from the aperture circumferential edge of the aperture portion 12b, the bottom end portion 13d advances beyond the aperture circumferential edge of the aperture portion 12b. Namely, the outer circumferential surface of the bottom end portion 13d of the field magnet portion 13a does not face the inner circumferential surface of the outer stator 12. In other words, the restoring magnet portion 13b near to the bottom end portion 13d faces the aperture portion 12b of the outer stator 12.

The length along the axis O of the field magnet portion 13a is approximately 40 mm, while the length along the axis O of the respective restoring magnet portions 13b is approximately 8 mm, and the thickness of the field magnet portion 13a and the restoring magnet portions 13b is approximately 3.5 mm. The length along the axis O of the outer stator 12 is approximately 65 mm, while the length along the axis O of the aperture portion 12b is not less than 18 mm and not more than 24 mm, and is preferably 21 mm. The aperture portion 12b is formed in the inner circumferential surface of the outer stator 12 such that the center portion of the aperture portion 12b in the direction of the axis O substantially matches the center portion in the O axial direction of the outer stator 12. The mover 13 moves reciprocatingly 10 mm either upwards or downwards in FIG. 1 and FIG 2 along the axis O thereof.

As has been described above, according to the reciprocating engine 10 of the present embodiment, when the mover 13 reaches the stroke end position of the mover 13 where the load of the reciprocating engine 10 is the maximum, because the boundary face between the first end portion 13c of the field magnet portion 13a and the restoring magnet portion 13b advances beyond the aperture circumferential edge of the aperture portion 12b of the outer stator 12, it is possible to prevent the outer circumferential surface of the first end portion 13c of the field magnet portion 12a facing the inner circumferential surface of the outer stator 12 at the stroke end position.

Accordingly, when the mover 13 reaches the stroke end position, it is possible to suppress the generation of a short circuiting magnetic path that is continuous with the interior of the outer stator 12 and the inner stator 11 via the first end portion 13c of the field magnet portion 13a, but that does not reach as far as the outer circumferential portion of the outer stator 12, and it is therefore possible to achieve an improvement in the output of the reciprocating engine 10.

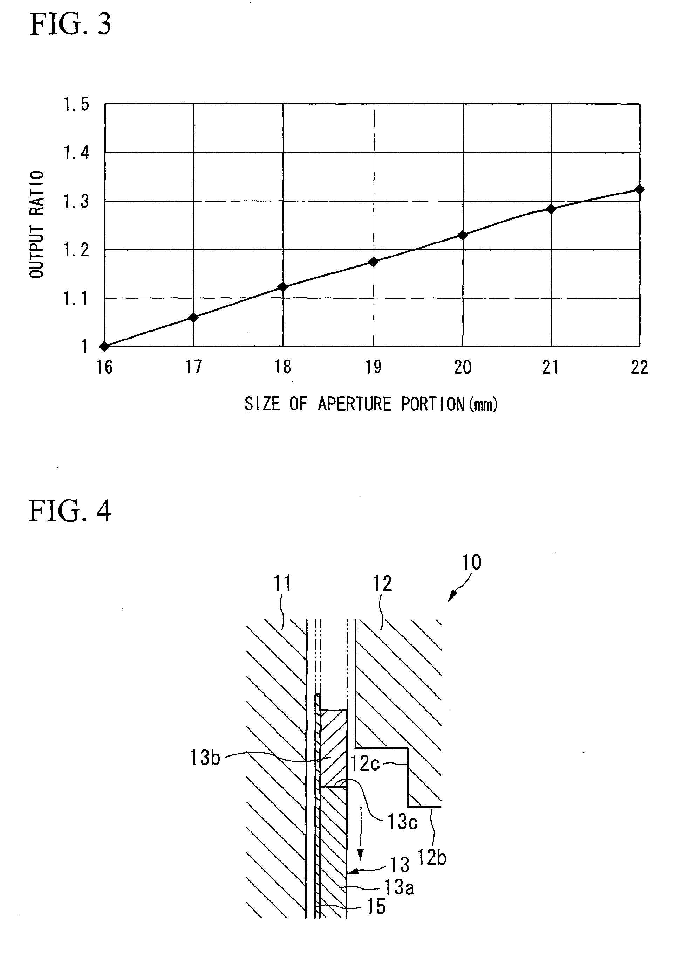

Here, a simulation experiment was performed in order to verify the above described operating effects. A plurality of reciprocating engines in which the dimensions of the respective portions were all the same, but in which the aperture dimension in the direction of the axis O of the aperture portion 12b was varied were employed as experiment models. As a result, as is shown in FIG 3, when the size along the axis O of the field magnet portion 13a was 40 mm, and the stroke amount along the axis O of the mover 13 was 10 mm vertically in FIG 1 and FIG. 2, then provided that the size of the aperture portion 12b was not less than 18 mm, it was confirmed that the operating effect was particularly outstanding. In FIG. 3, if the output when the aperture dimension of the aperture portion 12b is 16 mm is taken as 1, the output ratio represents the respective output ratios when the size is altered.

Note that the technological range of the present invention is not limited to the above described first embodiment and various modifications can be made insofar as they do not depart from the spirit or scope of the present invention.

For example, as in a second embodiment shown in FIG 4, it is also possible to form an undercut portion 12c in the aperture circumferential edge portion of the aperture portion 12b of the inner circumferential surface of the outer stator 12, with the undercut portion 12c being connected to the interior of the aperture portion 12b and being recessed towards the outside in the radial direction. When the mover 13 reaches the stroke end position, because the outer circumferential surface in the vicinity of the first end portion 13c of the field magnet portion 13a faces the undercut portion 12c, it is possible to suppress the aforementioned short circuiting from being formed.

Namely, as a result of the boundary face between the first end portion 13c of the field magnet portion 13a and the restoring magnet 13b being opposite the undercut portion 12c, the outer circumferential surface of the field magnet portion 13a in the vicinity of the first end portion 13c arrives at a position where it is not adjacent to the inner circumferential surface of the outer stator 12. As a result, it is possible to suppress the formation of the aforementioned short circuiting.

Furthermore, in the mover 13, it is also possible for the boundary face between the first end portion13c and the restoring magnet portion 13b to advance beyond the aperture circumferential edge of the aperture portion 12b and reach as far as a position where it reaches the interior of the aperture portion 12b. In this case as well, the formation of the aforementioned short circuiting is suppressed.

In the above described respective embodiments, a reciprocating engine that is provided with the mover 13 which is formed by the field magnet portion 13a and the restoring magnets 13b, and that is used in various types of power generator is illustrated, however, instead of this, it may also be a reciprocating engine that is only provided with the field magnet portion 13a and is used in a driving apparatus.

### INDUSTRIAL APPLICABILITY

In a reciprocating engine that uses magnetic force, it is possible to suppress the occurrence of short circuiting magnetic paths and achieve an improvement in output.

## Claims

1. A reciprocating engine comprising:
an inner stator having an axis;
a mover that has a cylindrical shape and is placed coaxially around the inner stator, and that moves reciprocatingly along the axis; and
an outer stator that has a cylindrical shape and is placed coaxially around the mover,
wherein the outer stator has:
an aperture portion that is formed in an inner circumferential surface thereof that faces the mover;
an internal space that opens via the aperture portion; and
a wound wire coil that is placed inside the internal space,
wherein the mover has:
a field magnet portion; and
restoring magnet portions that are provided respectively at both end positions along the axis of the field magnet portion, and
wherein boundary faces between the field magnet portion and the respective restoring magnet portions are each positioned such that, when the mover arrives at a stroke end position where the load on the reciprocating engine is at maximum, the boundary faces advance beyond an aperture circumferential edge of the aperture portion and reach to an inside of the aperture portion.

2. The reciprocating engine according to Claim 1, wherein
when the outer stator is viewed in a cross section which includes the axis, an undercut portion that is hollowed out from the inner circumferential surface towards the outside in the radial direction is formed in the aperture circumferential edge of the outer stator.

3. A reciprocating engine comprising:
an inner stator having an axis;
a mover that has a cylindrical shape and is placed coaxially around the inner stator, and that moves reciprocatingly along the axis; and
an outer stator that has a cylindrical shape and is placed coaxially around the mover,
wherein the outer stator has:
an aperture portion that is formed in an inner circumferential surface side thereof that faces the mover;
an internal space that opens via the aperture portion;
a wound wire coil that is placed inside the internal space; and
a undercut portion that is formed in the aperture circumferential edge of the aperture portion and that, when viewed in a cross section which includes the axis, is hollowed out from the inner circumferential surface side towards the outside in the radial direction,
wherein the mover has:
a field magnet portion; and
restoring magnet portions that are provided respectively at both end positions along the axis of the field magnet portion, and
wherein boundary faces between the field magnet portion and the respective restoring magnet portions are each positioned such that, when the mover arrives at a stroke end position where the load on the reciprocating engine is at maximum, the boundary faces reach to a position of the undercut portion.
